# EUROPEAN PATENT APPLICATION

(11) **EP 4 148 944 A1**
(43) Date of publication of application: **15.03.2023**
(21) Application number: 22194597.5
(22) Date of filing: 03.09.2020
(51) Int. Cl.: H02J 3/38, F03D 9/25, F03D 13/10, F03D 13/25, H02G 9/02, H02G 9/12

(54) **OFFSHORE SUBSEA POWER DISTRIBUTION**

(30) Priority: 03.09.2019 GB 201912612; 26.11.2019 GB 201917188; 27.11.2019 GB 201917260
(62) Divisional of application: 20781123.3
(71) Applicant: Aker Solutions AS, 1325 Lysaker (NO)
(72) Inventor: HEGGEDAL, Ole, 1475 FINSTADJORDET (NO); BJERKNES, Ole Johan, 0786 OSLO (NO); EIDSVIK, Håkon, 3044 DRAMMEN (NO); LAGSET, Atle, 0495 OSLO (NO)
(74) Representative: Zacco Norway AS

(57) **Abstract**

The disclosure relates to a method for temporary removal of an offshore power generation unit (7) from an array of connected offshore power generation units (7). The method comprises disconnecting an ingoing and an outgoing array cable from the offshore power generation unit (7), providing a junction box (3) having an inlet connection point and an outlet connection point, connecting the ingoing cable to the inlet connection point and the outgoing cable to the outlet connection point, locating the junction box (3) at a subsea location, using support means to position the junction box at a subsurface location having the ingoing array cable attached to the ingoing connection point, and the outgoing cable attached to the outgoing connection point, disconnecting the ingoing and the outgoing array cable from the inlet and outlet connection points, respectively, and reconnecting the ingoing and outgoing array cable to the offshore power generation unit (7a).

## Description

The present invention relates to offshore power distribution, and particularly to systems and methods for distributing electric power to (or from) offshore power generators or power consumers, and to offshore power plants associated therewith and the installation of subsea cables therefor, as well as to the temporary removal of an offshore structure from an array of connected structures.

### BACKGROUND

Offshore power generation is growing, and development of renewable resources such as offshore wind or wave power is seen as a key contributor to providing clean energy for the future. For example, offshore wind is already an established technology, and floating wind energy converters are currently being studied and developed by various research and development (R&D) groups, both within academia and industry, which will vastly increase the available areas suitable for offshore wind power generation. Other technologies being studied by various groups are wave and tidal power systems.

Publications which may be useful to understand the background include WO 2019/141841 A1; WO 2009/131826 A2; WO 2013/110276 A1; and WO 2013/050755 A2.

With a projected continued increase in the investments into offshore power generation in the future, there is a need for further improved technology for offshore power distribution. The present disclosure has the objective to provide such improvements, or at least alternatives, to the current state of the art.

### SUMMARY

In an embodiment, there is provided an offshore power distribution system comprising: a plurality of first cables, each first cable having a first dry mate connection at a first end thereof and being connected to an offshore power generator unit at a second end thereof; a subsea junction box arranged at a sea floor, wherein each dry mate connection terminates inside the junction box; a second cable extending from the junction box to a subsea transformer station arranged at the sea floor, the second cable having a second dry mate connection at an end thereof, the second dry mate connection terminating inside the junction box operatively connected to the first dry mate connection; the second cable extending to a subsea transformer station arranged at the sea floor and operatively connected to the transformer station; a third cable extending from the transformer station to an onshore receiver; the power distribution system being configured to transmit electric power from the offshore power generator unit, via the first, second and third cables, to an onshore receiver.

In an embodiment, there is provided a method of installing an offshore power distribution system comprising the steps: installing a plurality of power generators, each power generator having a first cable with a first dry mate connector at a first end thereof; installing a subsea transformer station at the sea floor and installing a third cable extending from the transformer station to an onshore receiver; installing a subsea junction box at the sea floor, connecting the subsea junction box and the transformer station with a second cable; connecting the first cable with the second cable, wherein the step of connecting the first cable with the second cable comprises establishing a dry mate connection between the first cable and the second cable within the junction box.

In an embodiment, there is provided a method of distributing power in an offshore power distribution system, the method comprising: operating an offshore power distribution system; retrieving a junction box from the sea floor to a vessel; carrying out an installation, de-installation or service operation on the junction box; and re-installing the junction box to the sea floor.

In an embodiment, there is provided an assembly for providing electric power to or from a subsea structure, the subsea structure having a pressure-resistant housing, the assembly comprising the subsea structure and an electric power cable, wherein:
the electric power cable comprises a continuous, metallic water barrier sheath encapsulating at least one electrical lead,
the water barrier sheath is sealingly terminated in a flange of the housing,
and the at least one electrical lead extends through the flange and to an inside of the housing.

In an embodiment, there is a method of operating a floating power plant, the method comprising mooring the power plant to a sea floor with a plurality of mooring lines fixed to anchors on the sea floor; connecting, to the floating power plant, at least one subsea cable each having a reserve length; operating the power plant while temporarily storing the reserve length at or adjacent the power plant; wherein the reserve length of the subsea cable is configured to compensate for a horizontal displacement of the power plant in relation to a remaining part of the subsea cable, whereby the remaining part remains stationary and the subsea cable remains operational during failure of any of the plurality of mooring lines.

In an embodiment, there is provided a floating power plant, comprising a floater; mooring lines extending from the floater to anchors at a sea floor; a subsea cable having a reserve length, the subsea cable being connected to the power plant; wherein the reserve length of the subsea cable is stored at or adjacent the power plant and configured to compensate for a horizontal displacement of the power plant in relation to a remaining part of the subsea cable, whereby the remaining part remains stationary and the subsea cable remains operational during failure of any of the plurality of mooring lines.

In an embodiment, there is provided a method for temporary removal of an offshore power generation unit from an array of connected offshore power generation units, comprising: disconnecting an ingoing and an outgoing array cable from the offshore power generation unit; providing a junction box having an inlet connection point and an outlet connection point; connecting the ingoing cable to the inlet connection point and the outgoing cable to the outlet connection point; locating the junction box at a subsea location; using support means to position the junction box at a subsurface location having the ingoing array cable attached to the ingoing connection point, and the outgoing cable attached to the outgoing connection point; disconnecting the ingoing and the outgoing array cable from the inlet and outlet connection points, respectively, and reconnecting the ingoing and outgoing array cable to the offshore power generation unit.

In an embodiment, there is provided a junction box for temporary connection to an array of offshore power generation units, comprising: a housing having an inlet connection point and an outlet connection point, the inlet connection point being in communication with the outlet connection point via internal cable located inside the housing; the housing comprising a lifting engagement arrangement for connection of lifting means; wherein the junction box is able to be lifted via engagement of a lifting means with the lifting engagement, with an inlet and an outlet cable at the inlet connection point and the outlet connection point.

The appended claims and the detailed description below outline further embodiments.

### BRIEF DESCRIPTION OF THE DRAWINGS

These and other characteristics will become clear from the following description of illustrative embodiments, given as non-restrictive examples, with reference to the attached drawings, in which:
Fig. 1 shows an example of an offshore power generator unit.
Fig. 2 shows an offshore power distribution system according to an embodiment.
Figs 3 and 4 illustrate parts of the offshore power distribution system in Fig. 2.
Fig. 5 shows an offshore power distribution system according to an embodiment.
Figs 6 and 7 show an offshore power distribution system according to an embodiment.
Figs 8-11 illustrate parts of an offshore power distribution system.
Figs 12-15 illustrate steps of a method of installing an offshore power distribution system.
Figs 16 and 17 illustrate aspects of an assembly for providing electric power to or from a subsea structure.
Fig. 18 shows a floatable wind energy power plant comprising a subsea cable with a reserved length according to an embodiment.
Fig. 19 illustrates a failure of a mooring line of the floatable wind energy power plant according to an embodiment.
Fig. 20 illustrates suspension of the floatable wind energy power plant during failure of a mooring line according to an embodiment.
Fig. 21 shows the displacement of the floatable wind energy power plant during failure of a mooring line from a top view according to an embodiment.
Fig. 22 shows the floatable wind energy power plant from a side view according to an embodiment.
Fig. 23 shows an embodiment of the floatable wind energy power plant with 3 mooring lines from a top view.
Fig. 24 shows an embodiment of the floatable wind energy power plant with 4 mooring lines from a top view.
Fig. 25 illustrates a junction box showing some external detail thereof.
Figure 26 shows a power generation unit being disconnected from an array in an offshore location.

### DETAILED DESCRIPTION

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

As used herein, the term "subsea cable" is intended to be representative of any type of cable such as, for example, single- double- or triple-core power cables, radial field or collectively shielded power cables or any other conductive or non-conductive cables or cords that are routed from a nacelle to a tower of a wind turbine, for example, control cables.

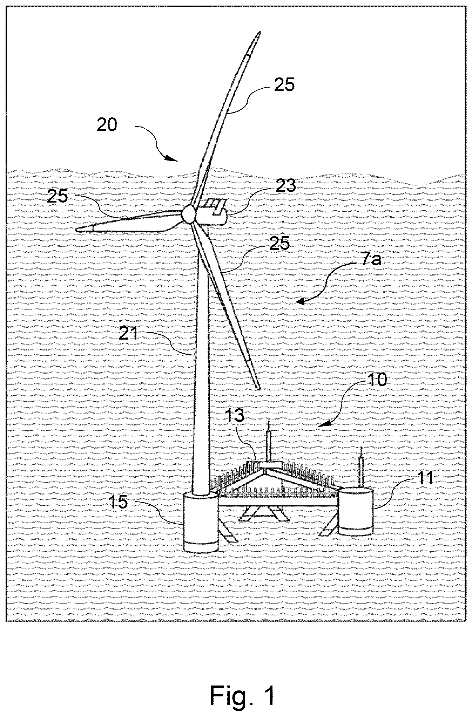

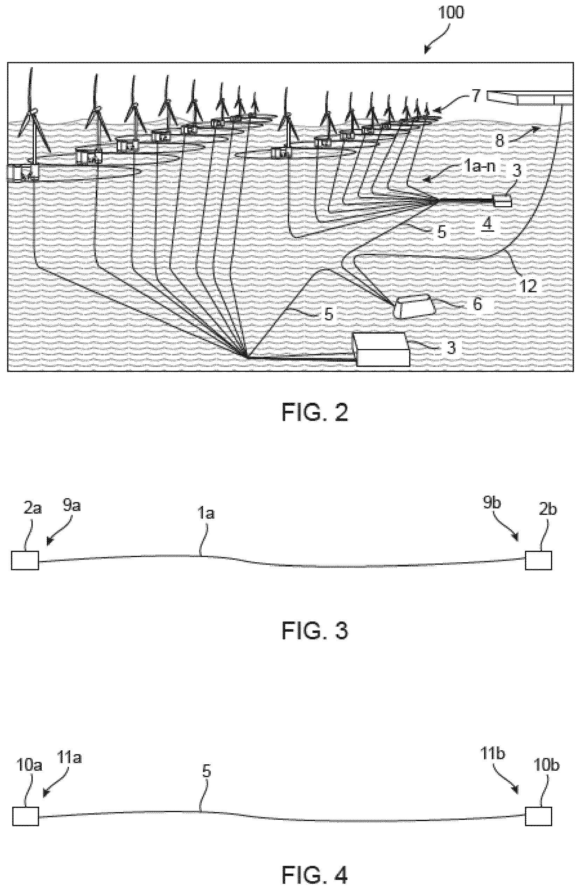

By way of example and context, Figs 1 and 2 illustrate one possible configuration which may be suitable for use with the power distribution method, system and arrangement of the present disclosure. It will, however, be appreciated that the distribution method and arrangement is not dependent on the exact design of other system components, such as the floater and subsea parts, which may have a design different from those described in the examples below.

Figure 1 illustrates an offshore power generation unit 7a suitable for use with embodiments of the present disclosure. The power generation unit 7a of Fig. 1 is a floating wind generator, or floatable wind energy power plant. Other types of power generation units suitable for use with embodiments of the present disclosure include bottom-fixed wind power generators, generators utilising tidal water, wave power, solar or nuclear energy, or any other type of offshore power generation unit.

The floatable wind energy power plant 7a comprises a floater 10 and a wind turbine 20. The wind turbine 20 can be of a conventional design with a tower 21, a nacelle 23 and blades 25.

The floater 10 comprises three columns 11,13,15. Each of the columns 11,13,15 is connected to at least two of the other columns 11,13,15. In some embodiments, there may be more than three columns in the floater 10, for example four, five or six columns.

Each column 11,13,15 has a lower part configured to be submerged in an operational position of the floater 10, in relation to column 15. Each column 11,13,15 is connected to at least two of the other columns at lower parts of the respective columns 11,13,15. This connection may be by means of substantially horizontal connection members.

Figure 2 illustrates an offshore power distribution system 100 according to an embodiment. The system 100 comprises a plurality of array cables 1a-n to transmit electrical power from a number of power generation units 7. Fig. 3 illustrates an array cable 1a schematically. Each array cable 1a-n has a dry mate connector 2b at a first, subsea end 9b of the cable. The second, topside end 9a of the array cable 1a-n is connected to a respective offshore power generator unit 7 with connector 2a.

In Fig. 2, each power generator unit 7 has its own dedicated array cable 1a-n. Optionally, there may be two or more power generator units 7 daisy chained, in which case the array cable 1a-n here would refer to the cable extending from the power generator unit 7 at the end of the chain and through which the power is routed from the other, daisy-chained power generator units 7.

Referring again to Fig. 2, a subsea junction box 3 is arranged at a sea floor 4. In this embodiment, two junction boxes 3 are used, however one junction box 3 or more than two junction boxes may also be used. Each dry mate connector 2b of the respective array cables 1a-n terminates inside the junction box 3 in this example. However, in the example where the power generator units 7 are daisy chained together, then fewer cables (e.g. one cable) may connect the daisy chained power generator units 7 to the junction box 3, while other array cables may form connections between the power generator units 7.

An intermediate cable 5 extends from the junction box 3 to a subsea transformer station 6 arranged at the sea floor 4. Fig. 4 illustrates the intermediate cable 5 schematically. The intermediate cable 5 has a dry mate connector 10a at one end 11a of the cable and another connector 10b at the other end 11b. The other connector 10b may be a similar dry mate connector as connector 10a, or a different type. The dry mate connector 10a terminates inside the junction box 3 and is operatively (i.e., electrically) connected to the dry mate connectors 2b of the array cables 1a-n. The intermediate cable 5 is thus arranged to transmit electrical power supplied by the array cables 1a-n.

The intermediate cable 5 extends from the junction box 3 to a subsea transformer station 6 also arranged at the sea floor 4. The intermediate cable 5 thus transmits electrical power from the array cables 1a-n to the transformer station 6, to which it is operatively connected.

An export cable 12 extends from the transformer station 6 to an onshore receiver 8. The export cable 12 is arranged to transmit electric power received from the intermediate cable 5 from the transformer station 6 to the onshore receiver 8. The onshore receiver may, for example, be an onshore grid, an energy storage plant, an electric power consumer, or the like.

The power distribution system 100 is thus configured to transmit electric power from the offshore power generator units 7, via the array cables 1a-n, the junction box 3, the intermediate cable 5, the transformer station 6, and the export cable 12 to the onshore receiver 8.

The transformer station 6 is configured to increase the voltage of the electric power received from the intermediate cable 5 before supplying it to the export cable 12. The export cable 12 thus operates with a higher voltage than the intermediate cable 5. Advantageously, the cross-section of the electrical leads in the export cable 12 is lower than the cross-section of the electrical leads in the intermediate cable 5. Nevertheless, the cross-section of the export cable 12 may be the same or larger than that of the intermediate cable 5, for example if the export cable 12 is very long or if several intermediate cables 5 supplies one export cable 12, as in the example shown in Fig. 2.

In any embodiment, the array cables 1a-n and the intermediate cable 5 can be configured to operate with the same voltage. In which case, there is substantially no change in voltage in the junction box 3.

In any embodiment, the design operational voltage for the array cables 1a-n and the intermediate cable 5 may be, for example, above 30 kV, above 40 kV, or above 65 kV.

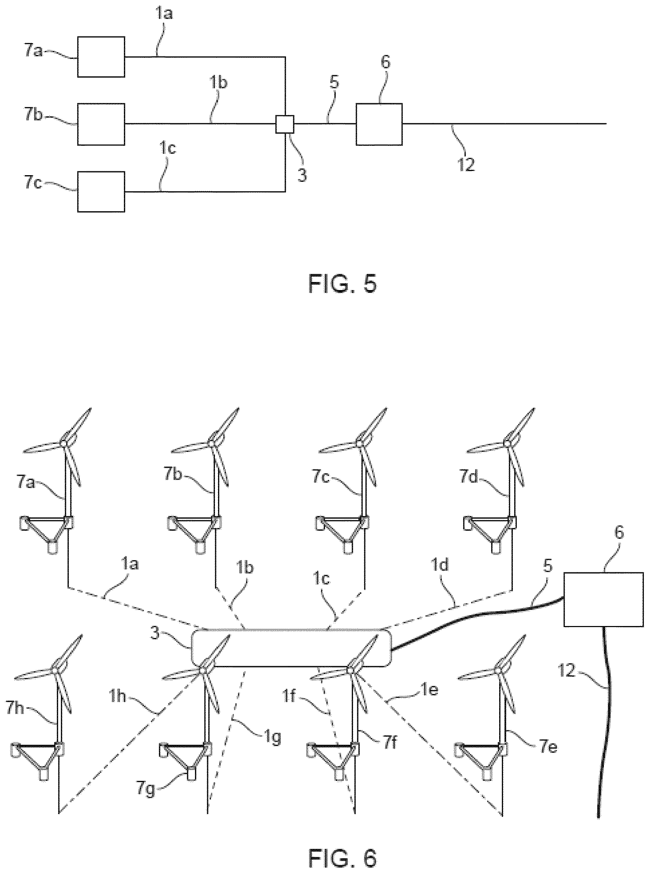

Figure 5 illustrates another embodiment, having three power generation units 7a-c. The other components are equivalent to those described above.

As will be appreciated, numerous other configurations of an offshore power generation systems are possible, e.g. having floating wind turbines of a different design, other types of power plants, a different number of power plants (from one to many), etc. For the present description, however, it will be assumed that the power plant is a floating wind energy power plant.

Figure 6 illustrates a further embodiment, having eight power generation units 7a-h, each having a respective array cable 1a-h extending to a junction box 3. The other components are equivalent to those described above.

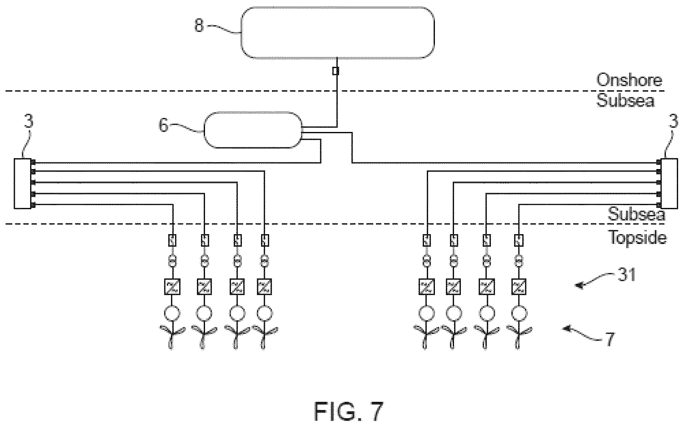

Figure 7 illustrates an electrical line diagram / connection chart for the embodiment shown in Fig. 6. Each power generation unit 7a-h may comprise electrical power conditioning components 31, as required. The electrical power conditioning components 31 may comprise a switchgear, as described in further detail below.

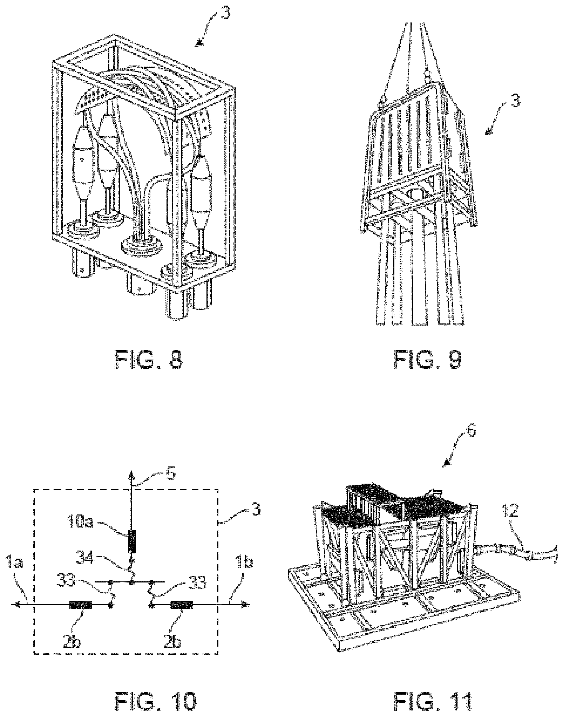

Figures 8 and 9 illustrate an example of a junction box 3 suitable for use with the embodiments described herein. Indicated in Fig. 8, the junction box 3 may comprise internal connectors/connections and also fuses, as described in more detail below. As can be seen in Fig. 9, the junction box is retrievable to surface from a vessel.

Illustrated in Fig. 10, the junction box 3 comprises the connectors 10a (connecting the intermediate cable 5 extending to the transformer station 6) and 2b (connecting the array cable(s) 1a-n coming from the power generation units 7; here illustrated with two array cables 1a, 1b). Additionally, the junction box 3 may comprise respective fuses 33,34. The fuses 33,34 may be arranged to cut the connection between one or more of the array cables 1a-n and the intermediate cable 5 in the event of e.g. excessive loads. There may be a fuse 34 operable to cut the connection between the intermediate cable 5 and all the array cables 1a-n. Additionally, or alternatively, there may be individual fuses 33 associated with each array cable 1a-n, and operable to cut the connection between a respective array cable 1a-n and the intermediate cable 5, while maintaining a connection between other array cables 1a-n and the intermediate cable 5.

As can be most clearly seen in Fig. 9, the junction box 3 is retrievable to surface from a vessel. In some examples, the junction box 3 may comprise a load bearing arrangement therein, which may assist to support the weight of cabling in some scenarios, for example where the junction box 3 and associated cabling is lifted. The load bearing arrangement may comprise a load bearing termination located on each of the array cables 1a, 1b, located inside the junction box 3. The load bearing termination may be, for example, a pull-head with a hang-off interface. The load bearing arrangement may function to transfer load from the array cables 1a, 1b, and to the junction box 3. As such, the junction box 3 may be able to bear a load equivalent to the weight of the array cables, for example if the junction box 3 is lifted with the array cables 1a, 1b attached thereto.

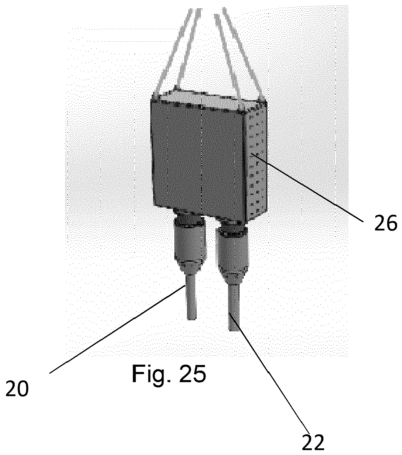

As can be most clearly seen in Figs. 9 and 25, the junction box 3 may be able to be attached to a crane or winch, which may facilitate holding of the junction box 3 on a vessel, and may additionally facilitate raising or lowering of the junction box to/from a subsea location. The described method may therefore comprise attachment of the junction box to a support means, such as a crane, cable or winch. This can be done by connecting a vessel crane hook or a winch wire to a forerunner or similar on the junction box 3. The junction box 3 can then be recovered to, or lowered from, a surface location (e.g. the deck of a vessel), for example through a vessel moonpool (if any) or to a worktable along the vessel side or similar.

Fig. 11 shows an illustration of the transformer unit 6 arranged on the sea floor with the export cable 12 connected thereto. (Intermediate cable 5 not visible here.)

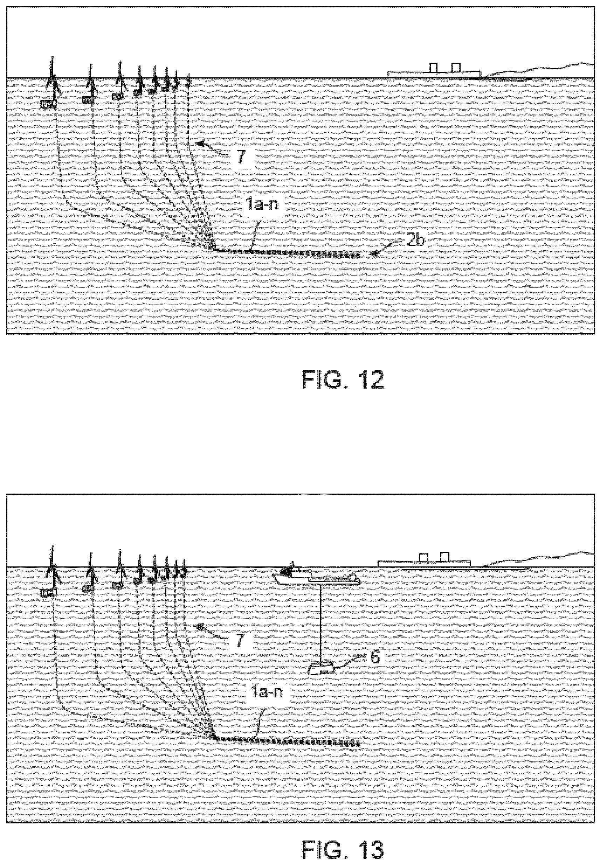

Figures 12-15 illustrate various steps in an installation method according to an embodiment. As shown in Fig. 12, a plurality of power generator units 7 can be installed offshore, for example by mooring to the sea floor or by fixed installation on the sea floor. Each power generator 7 has an array cable 1a-n for transmitting electrical power, and each array cable has a dry mate connector 2b at the end thereof. (See also Fig. 3.) The other end of the cable 1a-n is fixed and operationally connected to the power generator unit 7, for example in the tower or nacelle of the power generator unit 7. The dry mate connectors 2b can be wet stored on the sea floor upon installation of the power generator units 7 and the array cables 1a-n.

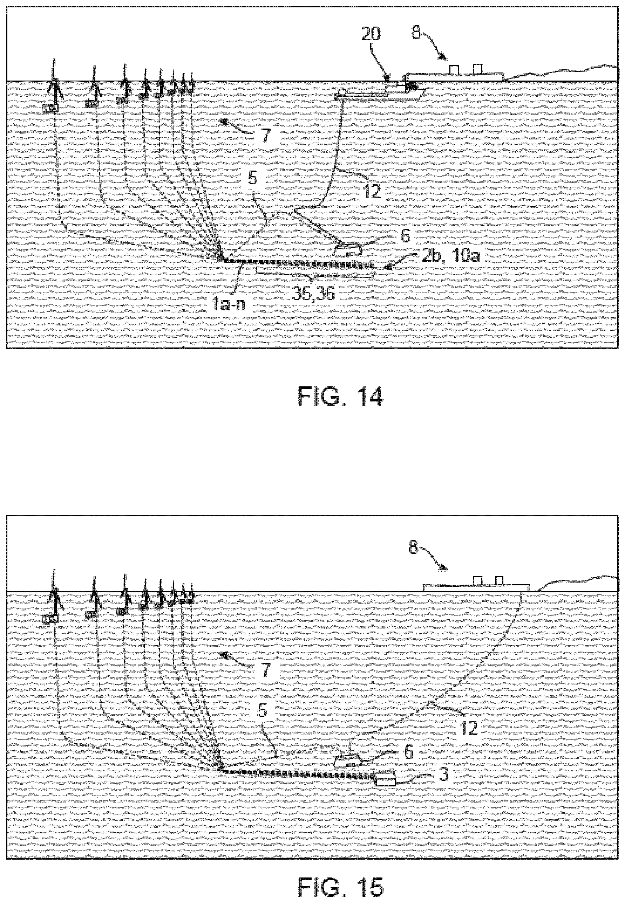

In Fig. 13, a subsea transformer station 6 is installed on the sea floor by a vessel 20. Shown in Fig. 14, an export cable 12 is further installed, the export cable 12 extending from the transformer station 6 to an onshore receiver 8.

Advantageously, the export cable 12 is dry mated to the subsea transformer station 6 before installation, and the transformer station 6 and the export cable 12 installed in the same operation. This avoids the need for a wet-mate connection between the export cable 12 and the transformer station 6, or a need to retrieve the transformer station 6 to connect the export cable 12 after installation. In such a case, depending on the desired installation method, the combined laying of the transformer station 6 and the export cable 12 can either start offshore with the transformer station 6 and end with the landfall of the export cable 12, or the other way around starting with landfall of the export cable 12 and ending with deploying the transformer station 6.

Advantageously, the intermediate cable 5 may also be dry mated to the subsea transformer station 6 before installation, and the intermediate cable 5 and the transformer station 6 installed in the same operation. This avoids the need for a wet-mate connection between the intermediate cable 5 and the transformer station 6, or a need to retrieve the transformer station 6 to connect the intermediate cable 5 after installation.

Advantageously, the intermediate cable 5 can be laid out on the sea floor in parallel with the subsea ends of the cables 1a-n. This is illustrated in Fig. 14, where the connectors 2b and 10a are wet-stored adjacent each other on the sea floor. This may ease the installation of a junction box 3, described below. Optionally, an end section 35 of the array cable(s) 1a-n and an end section 36 of the intermediate cable 5 (see Fig. 14) which are laid out in parallel has a length which is larger than the water depth at the site. This provides that a more controlled retrieval of the connectors 2b,10a and the end sections 35,36 can be achieved, in that the parallel sections 35,36 can be raised and lowered together by a vessel with lower risk of complications.

The method further comprises installing a subsea junction box 3 at the sea floor, as shown in Fig. 15, and arranging the intermediate cable 5 to interconnect the subsea junction box 3 and the transformer station 6. Additionally, the array cables 1a-n are operationally connected with the intermediate cable 5 inside the junction box 3 by establishing a dry mate connection between the array cables 1a-n and the intermediate cable 5 within the junction box 3.

As noted above, the method may comprise retrieving the dry mate connectors 2b of the array cables 1a-n from the sea floor if they have been wet stored, and establishing the dry mate connection inside the junction box 3 at a vessel 20. The intermediate cable 5 may also have been wet stored after installation, and the method may therefore also comprise retrieving a dry mate connector 10a of the intermediate cable 5 before establishing the dry mate connection in the junction box 3.

The connection of the array cables 1a-n to the intermediate cable 5 can take place in parallel or one by one depending on whether one or more array cables 1a-n are recovered to deck together with the intermediate cable 5. The array cables 1a-n can optionally be recovered one at a time.

After making up the connection between the array cable(s) 1a-n and the intermediate cable 5 in the junction box 3, the junction box 3 with the cables 1a-n,5 connected is lowered to the seabed. Optionally, the next array cable 1a-n may be retrieved for connection to the junction box 3, if the process is done sequentially in steps for different array cables 1a-n. In that case, the process can be repeated until all array cables 1a-n are connected to the intermediate cable 5 and the make-up of the junction box 3 is completed. Recovery of one or more array cables 1a-n can alternatively be performed by a second vessel, if available, and then handed over to the main vessel by wet hand shake or similar method.

Optionally, to recover more than one (or all) of the array cables 1a-n and the intermediate cable 5 to deck in one run, the cable ends 2b,10a can be arranged in a recovery frame subsea. The recovery frame is then recovered to deck according to the same steps as for a single cable connection, and the connection between the array cables 1a-n and the intermediate cable 5 can take place in parallel.

As described above, the subsea transformer station 6 can be installed together with the intermediate cable 5 and with a transformer end connector 10b (see Fig. 4) of the intermediate cable 5 having been pre-installed on the transformer station 6 prior to deployment. Additionally, or alternatively, the subsea transformer station 6 can be installed with the export cable 12 or a part of the export cable 12 (e.g. a "tail end") having been pre-installed on the transformer station 6, and whereby a connection is subsequently made up between the tail end and the respective export cable 12 and/or intermediate cable 5. This may be a dry mate connection established by retrieving the tail end(s) and respective export cable 12 and/or intermediate cable 5 end(s) and connecting these, for example on a vessel deck.

As will be understood, the different steps of the method may be altered. For example, cable ends can be wet-stored intermediately in order that the method can be carried out most efficiently, for example in view of the service vessels available at any given time, or a given weather window.

Advantageously, a system and method according to embodiments of the present disclosure allow more operational flexibility and easier maintenance of the offshore power distribution system. For example, after employment of the subsea power distribution system 100, the junction box 3 may be retrieved at a later time by a vessel, to provide maintenance, repairs, replacements, etc.

In use, the method of operating the offshore power distribution system 100 can therefore include retrieving the junction box 3 from the sea floor to a vessel 20 and re-installing the junction box 3. This may be done, for example, to replace fuses 33,34 in the junction box 3, to add or remove power generator units 7 to/from the system, etc.

Embodiments may further provide a more cost-competitive power distribution through de-bottlenecking by using existing equipment in the marked and reduced cost by less complex components (e.g., standardized cable design), and reduced maintenance costs. Compared to some alternatives, embodiments herein may reduce the number of pressure-sensitive components arranged subsea.

In the above embodiments, the topside and subsea connections of the array cables 1a-n are made by dry mate connectors 2a and 2b, respectively. Alternatively, one or both of these may be a different type of dry mate connection. Particularly, this dry mate connection may be a spliced connection. Similarly, one or both of the end connections of the intermediate cable 5 may be a spliced, dry mate connection instead of one or both of the connectors 10a, 10b.

Each power generation unit 7 may have a respective switchgear arranged on the power generation unit 7. (For example, in the case of a floating wind turbine such as that illustrated in Fig. 1, the switchgear may be arranged in the floater or in the turbine tower or nacelle.) The switchgear may be operable to disconnect the respective power generation unit 7 from its array cable 1a-n.

Advantageously, the system may be arranged such that neither the array cables 1a-n, the subsea junction box 3, the second cable 5 nor the transformer station 6 comprises a switchgear. By providing the switchgear in the power generation units 7 and having no switchgear in the mentioned subsea components, the risk of downtime or failure can be reduced. (With "switchgear" is meant a selectively operable switch or switching mechanism, i.e. one by which an operator can make or break an electrical connection, and unlike the (passive and automatic) fuses 33,34.)

Advantageously, the system may be arranged such that neither the array cables 1a-n, the subsea junction box 3 nor the second cable 5 comprises a wet-mate connector.

Advantageously, the export cable 12 may be configured for operation with a voltage of 132 kV or more.

Various further inventive aspects and examples according to the present disclosure may be summarised in the following clauses:
CLAUSE A1. An offshore power distribution system (100) comprising:
   a plurality of first cables (1a-n), each first cable (1a-n) having a first dry mate connection (2b) at a first end (9b) thereof and being connected to an offshore power generator unit (7) at a second end (9a) thereof;
   a subsea junction box (3) arranged at a sea floor (4), wherein each dry mate connection (2b) terminates inside the junction box (3);
   a second cable (5) extending from the junction box (3) to a subsea transformer station (6) arranged at the sea floor (4), the second cable (5) having a second dry mate connection (10a) at an end (11a) thereof, the second dry mate connection (10a) terminating inside the junction box (3) operatively connected to the first dry mate connection (2b);
   the second cable (5) extending to a subsea transformer station (6) arranged at the sea floor (4) and operatively connected to the transformer station (6); a third cable (12) extending from the transformer station (6) to an onshore receiver (8);
   the power distribution system being configured to transmit electric power from the offshore power generator unit (7), via the first, second and third cables, to an onshore receiver (8).
CLAUSE A2. An offshore power distribution system (100) according to clause A1, wherein the first dry mate connection (2b) is:
   a dry mate connector (2b), or
   a spliced connection.
CLAUSE A3. An offshore power distribution system (100) according to clause A1 or A2, wherein the second dry mate connection (10a) is:
   a dry mate connector (10a), or
   a spliced connection.
CLAUSE A4. An offshore power distribution system (100) according to any preceding clause, wherein the third cable (12) is configured to operate with a higher voltage than the first cables (1a-n) and the second cable (5).
CLAUSE A5. An offshore power distribution system (100) according to any preceding clause, wherein the first cables (1a-n) and the second cable (5) are configured to operate with the same voltage.
CLAUSE A6. An offshore power distribution system (100) according to any preceding clause, wherein a cross-section of the third cable (12) is lower than a cross-section of the second cable (5) or the combined cross-section of a plurality of second cables (5).
CLAUSE A7. An offshore power distribution system (100) according to any preceding clause, wherein the subsea junction box (3) is retrievable to surface.
CLAUSE A8. An offshore power distribution system (100) according to any preceding clause, wherein each of the plurality of first cables (1a-n) is operatively connected to an inline fuse (33) arranged in the junction box (3).
CLAUSE A9. An offshore power distribution system (100) according to any preceding clause, wherein the plurality of first cables (1a-n) has a design operational voltage of above 45 kV.
CLAUSE A10.An offshore power distribution system (100) according to any preceding clause, wherein each power generation unit (7) comprises a respective switchgear arranged on or in the power generation unit (7), the switchgear being operable to selectively disconnect the respective power generation unit (7) from its first cable (1a-n).
CLAUSE A11.An offshore power distribution system (100) according to the preceding clause, wherein neither the first cable (1a-n), the subsea junction box (3), the second cable (5) nor the transformer station (6) comprises a switchgear operable to selectively disconnect a power generation unit (7).
CLAUSE A12.An offshore power distribution system (100) according to any preceding clause, wherein an end section (35) of the first cables (1a-n) and an end section (36) of the second cable (5) are laid out in parallel on the sea floor (4).
CLAUSE A13.An offshore power distribution system (100) according to the preceding clause, wherein the end section (35) of the first cables (1a-n) and the end section (36) of the second cable (5) are laid out at position having a water depth, and wherein the end section (35) of the first cables (1a-n) and the end section (36) of the second cable (5) which are laid out in parallel on the sea floor (4) each have a length which is larger than the water depth.
CLAUSE A14.A method of installing an offshore power distribution system (100) comprising the steps:
   installing a plurality of power generators (7), each power generator having a first cable (1a-n) with a first dry mate connector (2b) at a first end (9b) thereof;
   installing a subsea transformer station (6) at the sea floor (4) and installing a third cable (12) extending from the transformer station (6) to an onshore receiver (8);
   installing a subsea junction box (3) at the sea floor (4),
   connecting the subsea junction box (3) and the transformer station (6) with a second cable (5);
   connecting the first cable (1a-n) with the second cable (5), wherein the step of connecting the first cable (1a-n) with the second cable (5) comprises establishing a dry mate connection between the first cable (1a-n) and the second cable (5) within the junction box (3).
CLAUSE A15.A method according to clause 14, comprising
   wet storing the first dry mate connector (2b) at a sea floor (4);
   and wherein the step of connecting the first cable (1a-n) with the second cable (5) comprises retrieving the first dry mate connector (2b) from the sea floor (4) and establishing the dry mate connection between the first cable (1a-n) and the second cable (5) at a vessel (20).
CLAUSE A16.A method according to clause 14 or 15, comprising wet storing a second dry mate connector (10a) connected to the second cable (5) at a sea floor (4); and
   wherein the step of connecting the first cable (1a-n) with the second cable (5) comprises retrieving the second dry mate connector (10a) from the sea floor (4) before establishing the dry mate connection between the first cable (1a-n) and the second cable (5) at the vessel (20).
CLAUSE A17.A method according to any of clauses A14 to A16, comprising arranging an end section (35) of the first cables (1a-n) and an end section (36) of the second cable (5) in parallel on the sea floor (4).
CLAUSE A18.A method according to the preceding clause, wherein the end section (35) of the first cables (1a-n) and the end section (36) of the second cable (5) are arranged at position having a water depth, and wherein the end section (35) of the first cables (1a-n) and the end section (36) of the second cable (5) which are arranged in parallel on the sea floor (4) each have a length which is larger than the water depth.
CLAUSE A19.A method according to any of clauses A14 to A18, comprising installing the subsea transformer station (6) together with the second cable (5) and with a transformer end connector (10b) of the second cable (5) having been pre-installed on the transformer station (6).
CLAUSE A20.A method according to any of clauses A14 to A19, comprising installing the subsea transformer station (6) together with the third cable (12) or a part of the third cable (12), and with the third cable (12) or the part of the third cable (12) having been pre-installed on the transformer station (6).
CLAUSE A21.A method of distributing power in an offshore power distribution system (100), the method comprising:
   operating a system according to any of clauses A1-A13;
   retrieving the junction box (3) from the sea floor (4) to a vessel (20);
   carrying out an installation, de-installation or service operation on the junction box (3); and
   re-installing the junction box (3) to the sea floor (4).

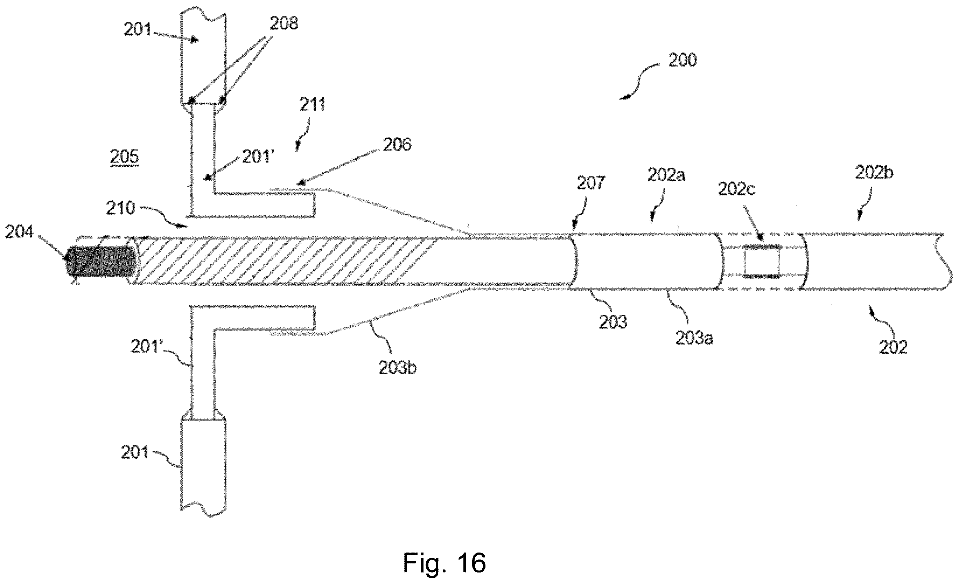

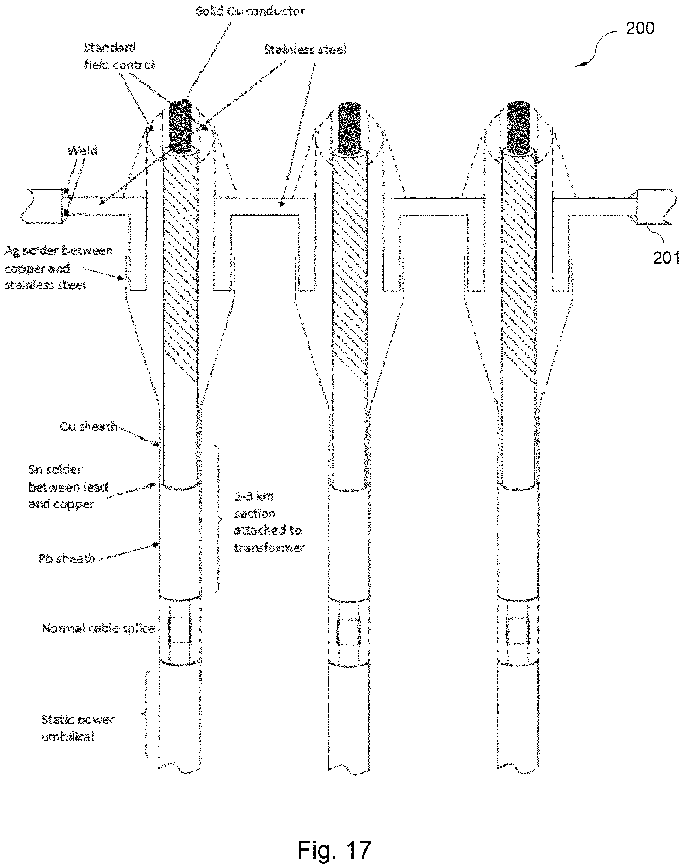

In another aspect, illustrated in Figs 16 and 17, there is provided an assembly for providing electric power to or from a subsea structure.

Various offshore applications require transmission of electricity at high power levels. This may include offshore power generation such as the examples described above, where generated electric power needs to be transmitted large distances to shore or to offshore distribution stations or direct consumers. Other examples include offshore power supply, where electric power is provided to offshore consumers from shore or from offshore power generators spaced from the consumer. This may include, for example, offshore platforms for petroleum exploration or production, having high electric power demands. Often, subsea terminations or interconnections may be desirable or necessary for such electric power transmission. The aspects illustrated in Figs 16 and 17 are consequently not limited to any particular application, but may be used in any type of offshore power transmission.

Wet mate connectors for subsea cables have limitations with respect to the voltage levels that can be used. In applications with high power demands and/or long step out distances, it is usually desirable to increase the voltage level as much as possible, to levels where wet mate connectors are unsuitable. For voltages of above ca. 70 kV, a "dry design" is usually required, i.e. wherein a water barrier is provided such that the connector for the electrical leads is dry. In connectors for connecting a cable to a subsea structure, such as a transformer or distribution station or a subsea consumer, such as a subsea compressor, a penetrator through the subsea structure housing may be used. Water barriers may be used around the electrical leads to allow for a dry design.

Figs 16 and 17 illustrate an embodiment of an assembly 200 for providing electric power to or from a subsea structure. Fig. 16 shows a side view and Fig. 17 shows a top view of the (in this embodiment) three-cable assembly 200. The subsea structure may, for example, be a subsea junction box 3 or transformer station 6 as described above, or another type of power generator, distribution unit, or consumer located subsea.

The subsea structure 3,6 has a pressure-resistant and watertight housing 201 to provide a dry environment at an inside 205 of the structure, for example for connectors, power electronics, or other components. The assembly 200 further comprises an electric power cable 202 for distributing electric power to or from the subsea structure 3,6. In some applications the power cable 202 may be many kilometers long. If required, the power cable can be made up of individual parts 202a, 202b which are spliced together using cable splices 202c in the known manner.

The electric power cable 202 comprises a continuous, metallic water barrier sheath 203 encapsulating at least one electrical lead 204 inside the cable 202. The water barrier sheath 203 continues along the cable 202, and may be arranged along a significant part of, or along substantially the entire cable 202, including around any cable splice(s) 202c. (For example, the cable 202 may extend all the way to a shoreside plant, and the water barrier sheath 203 may be provided along the entire cable 202 to a "dry" termination at the other cable endpoint.)

The water barrier sheath 203 is sealingly terminated in a flange 201' of the housing 201, while the at least one electrical lead 204 extends through the flange 201' and to the inside 205 of the housing 201. This can be done as illustrated in Figs 16 and 17 by separating the water barrier sheath 203 from the electrical lead(s) 204 at the flange 201' and fixing the water barrier sheath 203 to the flange 201' at an outside of the housing 201, while arranging the electrical lead(s) to proceed into the housing 201 through the flange 201'. The water barrier sheath 203 may, for this purpose, be welded or soldered to the flange 201'.

The flange 201' may be a flange which is fixed to the housing 201 by means of welding (see weld 208 in Fig 16), or it may be an integrated part of the housing 201. The flange 201' provides an aperture 210 through a wall of the housing 201 as well as a fixation interface 211 for the water barrier sheath 203, however may otherwise have any suitable shape or form.

The water barrier sheath 203 may comprise a first part 203a and a second part 203b, wherein the second part 203b is an intermediary water barrier sheath part arranged between the flange 201' and the first part 203a. The first part 203a may be a sheath extending along the majority of the cable length, e.g. to the other cable endpoint.

A first solder or weld 206 can provide a watertight connection between the second part 203b and the flange 201', and a second solder or weld 207 can provide a watertight connection between the second part 203b and the first part 203a.

The first part 203a may advantageously consist predominantly of lead (Pb) or a lead-alloy. Lead provides the advantages of being easy to extrude and having good resistance to seawater. Other materials may, however, be suitable.

The second part 203b may advantageously consist predominantly of copper (Cu) or a copper alloy. A solder between lead and copper water barriers provides good performance, and copper is also solderable to stainless steel, making it a good material option for the second part 203b. Other materials may, however, be suitable.

The flange 201' may advantageously be made of a non-magnetic metal to ensure no electromagnetic interference between the three phases. The flange 201' may be made of a high alloyed stainless steel or a nickel based alloy. Other materials may, however, be suitable.

The solder materials may advantageously be more noble than both materials to be joined.

The solder materials may advantageously have a melting point lower than both materials to be joined.

The solder materials may be, for example, Ag or Sn.

By "consisting predominantly of" in the above examples of suitable materials for the different parts, it is meant that the part comprises more than 70%, more than 80%, more than 90%, more than 95%, more than 98% or more than 99% by mass of the respective material. An entirely pure material mixture may not be strictly necessary.

Fig. 17 indicates an example of suitable materials combinations for the different parts. Various other combinations may, however, be suitable.

The cable 202 may comprise more than one electrical lead 204 encapsulated by the water barrier sheath 203. Alternatively, or additionally, the assembly 200 may comprise several cables 202 terminated in the same housing 201. This is used in the embodiment illustrated in Figs 16 and 17, having three cables 202. Each electric power cable 202 comprises a continuous, metallic water barrier sheath 203 encapsulating at least one electrical lead 204 in the respective cable 202. As can be seen in Fig. 17, the water barrier sheaths 203 of the individual electric power cables 202 can be sealingly terminated in separate flanges 201' of the housing 201, and the electrical lead(s) 204 of a given electric power cable 202 extends through the respective flange 201' and to the inside 205 of the housing 201.

By terminating the water barrier sheath(s) 203 directly to the housing 201,201', a continuous metallic water barrier is provided along the entire length of the cable 202 and to the flange 201' or wall of the housing 201, while the electrical lead 204 can be provided into the housing 201 without any connector or penetrator. This eliminates problems associated with connectors having limited voltage and/or power capacity, in that the electrical lead 204 can be kept as a continuous piece all the way to its termination point, e.g. on a component inside the housing 201. Higher powers/voltages may therefore be allowed. Moreover, the risk of leakage or other operational problems associated with penetrators or connectors can be reduced or eliminated, as the cable termination system on the outside of the housing 201 is simplified and does not include termination of the electrical lead(s) 204 at the cable-housing interface.

Various further inventive aspects and examples according to the present disclosure may be summarised in the following clauses:
CLAUSE B1. Assembly (200) for providing electric power to or from a subsea structure (3,6), the subsea structure (3,6) having a pressure-resistant housing (201), the assembly (200) comprising the subsea structure (3,6) and an electric power cable (202), wherein:
   the electric power cable (202) comprises a continuous, metallic water barrier sheath (203) encapsulating at least one electrical lead (204),
   the water barrier sheath (203) is sealingly terminated in a flange (201') of the housing (201),
   and the at least one electrical lead (204) extends through the flange (201') and to an inside (205) of the housing (201).
CLAUSE B2. Assembly according to the preceding clause B1, wherein the water barrier sheath (203) is welded or soldered to the flange (201').
CLAUSE B3. Assembly according to clause B1or B2, wherein the water barrier sheath (203) comprises a first part (203a) and a second part (203b), and wherein the second part (203b) is an intermediary water barrier sheath part arranged between the flange (201') and the first part (203a).
CLAUSE B4. Assembly according to the preceding clause, comprising a first solder or weld (206) between the second part (203b) and the flange (201'), and a second solder or weld (207) between the second part (203b) and the first part (203a).
CLAUSE B5. Assembly according to any of the two preceding clauses, wherein the first part consists predominantly of lead (Pb) or a lead alloy.
CLAUSE B6. Assembly according to any of the three preceding clauses, wherein the second part consists predominantly of copper (Cu) or a copper alloy.
CLAUSE B7. Assembly according to any of clauses B1 to B6, wherein the flange (201') consists predominantly of a non-magnetic metal.
CLAUSE B8. Assembly according to the preceding clause, wherein the flange (201') consists predominantly of stainless steel or a nickel based alloy.
CLAUSE B9. Assembly according to any of the six preceding clauses, wherein the first part (203a) and the second part (203b) are provided in different materials.
CLAUSE B10.Assembly according to any of the seven preceding clauses, wherein the first part (203a) and the second part (203b) are soldered together by a first solder material.
CLAUSE B11.Assembly according to the preceding clause, wherein the first solder material is more noble than both materials to be joined.
CLAUSE B12.Assembly according to any of the two preceding clauses, wherein the first solder material has a melting point lower than both materials to be joined.
CLAUSE B13.Assembly according to any of the three preceding clauses, wherein the first solder material consists predominantly of Ag or Sn.
CLAUSE B14.Assembly according to any of the eleven preceding clauses, wherein the second part (203b) and the flange (201') are soldered together by a second solder material.
CLAUSE B15.Assembly according to the preceding clause, wherein the second solder material is more noble than both materials to be joined.
CLAUSE B16.Assembly according to any of the two preceding clauses, wherein the second solder material has a melting point lower than both materials to be joined.
CLAUSE B17.Assembly according to any of the three preceding clauses, wherein the second solder material consists predominantly of Ag or Sn.
CLAUSE B18.Assembly (200) according to any of clauses B1 to B17, wherein the at least one electrical lead (204) comprises more than one electrical lead (204) encapsulated by the water barrier sheath (203).
CLAUSE B19.Assembly (200) according to any of clauses B1 to B18, comprising a plurality of electric power cables (202), each electric power cable (202) comprising a continuous, metallic water barrier sheath (203) encapsulating at least one electrical lead (204), wherein the water barrier sheaths (203) of individual electric power cables (202) is sealingly terminated in separate flanges (201') of the housing (201), and the at least one electrical lead (204) of a given electric power cable (202) extends through the respective flange (201') and to an inside (205) of the housing (201).

As will be appreciated, numerous other configurations of offshore power generation systems are possible, e.g. having floating wind turbines of a different design, other types of power plants, a different number of power plants (from one to many), etc. For the present description, however, it will be assumed that the power plant is a floating wind energy power plant.

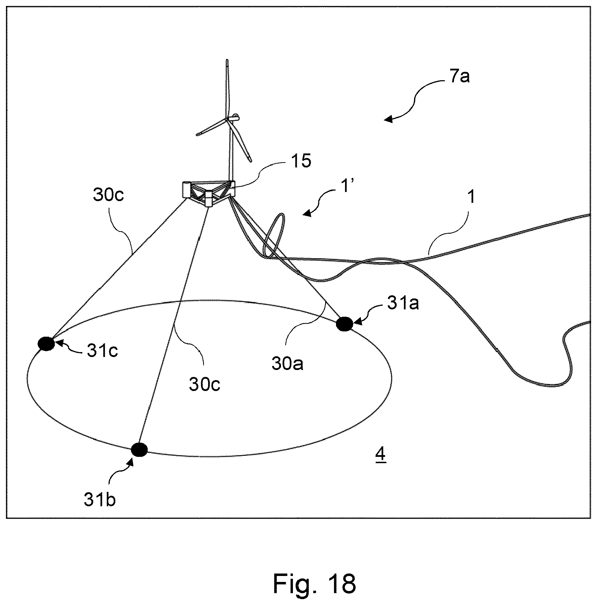

Fig. 18 shows the floatable wind energy power plant 7a comprising an array cable 1 for distributing electrical power and/or control signals to or from the power plant 7a. As depicted in Fig. 18, the array cable 1 is connected to the floater of the power plant 7a (here: fixed to the column 15) and extends from the power plant 7a to the sea floor and further to a subsea connection point (e.g. a junction box 3) or, for example, to shore. The power plant 7a is moored to the sea floor 4 by means of three mooring lines 30a-c, extending from the floater 10 and fixed to the sea floor 4 in anchors 31a-c. More than three mooring lines may be used, for example four, five, six or more.

The array cable 1 has a reserve length 1' (for example in the order of tens of meters or more). The reserve length 1' is thus a part of the array cable 1, however is a superfluous length of cable in the regular operating position of the power plant 7a. The reserve length 1' may, for example, simply be laid down on the sea floor 4, it may be fixed to the power plant 7a floater (e.g. hung off from the floater 10), arranged with buoyancy elements in another storage arrangement, or arranged in another suitable manner.

The reserve length 1' of the array cable 1 is operational and/or utilized during failure of any single mooring line 30a-30c of the floatable wind energy power plant 7a. In the event of failure of a mooring line 30a-30c and the resulting horizontal displacement of the floatable wind energy power plant 7a, the reserve length 1' of the array cable 1 prevents damage to the array cable 1a and/or a required emergency disconnect of the floatable wind energy power plant 7a from the array cable 1.

In some embodiments, the reserve length 1' of the array cable 1 may be wrapped, for example, to a base of the floater 10. Alternatively, the reserve length 1' of the array cable 1 may be suitably positioned without wrapping to the base of the floater 10, for example hung off from the floater 10.

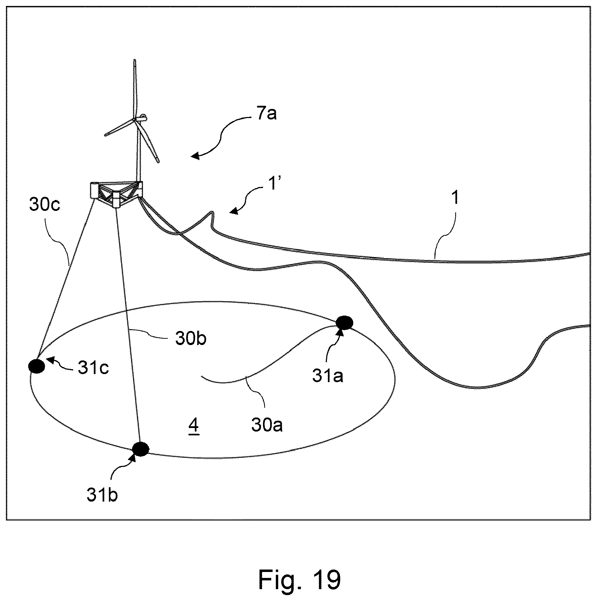

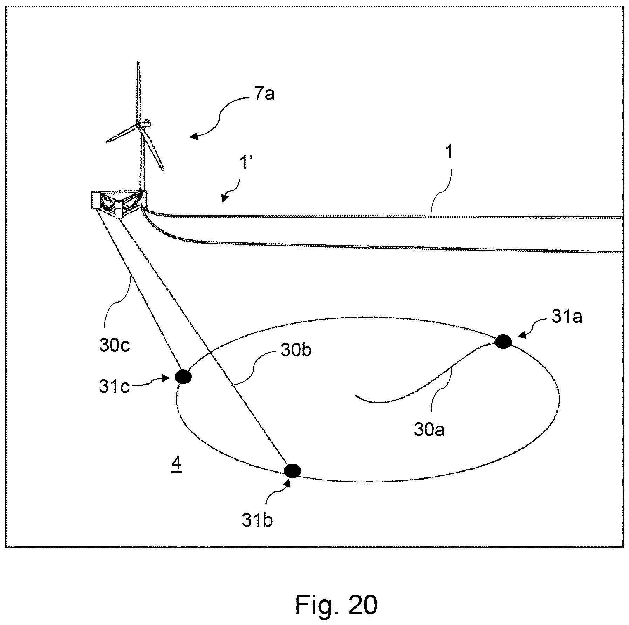

Fig. 19 illustrates a failure of a mooring line 30a of the floatable wind energy power plant 7a according to an embodiment. As depicted in Fig. 19, when the floatable wind energy power plant 7a is in operation, the mooring line 30a may fail. In such a case, the reserve length 1' of the array cable 1 enables the floatable wind energy power plant 7a to retain connection with the array cable 1 even if the floater 10 is horizontally displaced. The position of the floatable wind energy power plant 7a may shift gradually as shown in Fig. 19 and Fig. 20, due to failure of the mooring line 30a. As can be seen from Fig. 20, at some point the remaining, intact mooring lines 30b,c will hold the floater 10 in place in a position different to the original position, i.e. they will stop the floater 10 from being displaced further. The length of the reserve length 1' can be chosen to correspond with such a displacement distance in the event of one mooring line failure.

Due to the reserve length 1' of the array cable 1 the floatable wind energy power plant 7a retains connection with the array cable 1 and thereby with the grid. As the floater is displaced, the reserve length 1' will be extended, rolled-out or equivalent to compensate for the displacement without the rest of the array cable 1 (i.e. that part extending further towards e.g. the junction box 3) being stretched or moved. Such a breakage of a mooring line 30a may otherwise have led to breakage of the array cable 1. Thus, the reserve length 1' of the array cable 1 allows the floatable wind energy power plant 7a to retain the connection with the array cable 1, during failure of any of the mooring lines 30a-30c.

In an embodiment, the reserve length of the array cable 1 is a function of the length of the mooring lines 30a-30c. For example, the reserve length 1' of the array cable 1 can be equal to the horizontal span of any of the mooring lines 30a-30c.

In another embodiment, the reserve length 1' of the array cable 1 may be more than the horizontal span of any of the mooring lines 30a-30c. Therefore, the reserve length 1' of the array cable 1 may be selected in accordance with requirements and design specifications of the floatable wind energy power plant 7a.

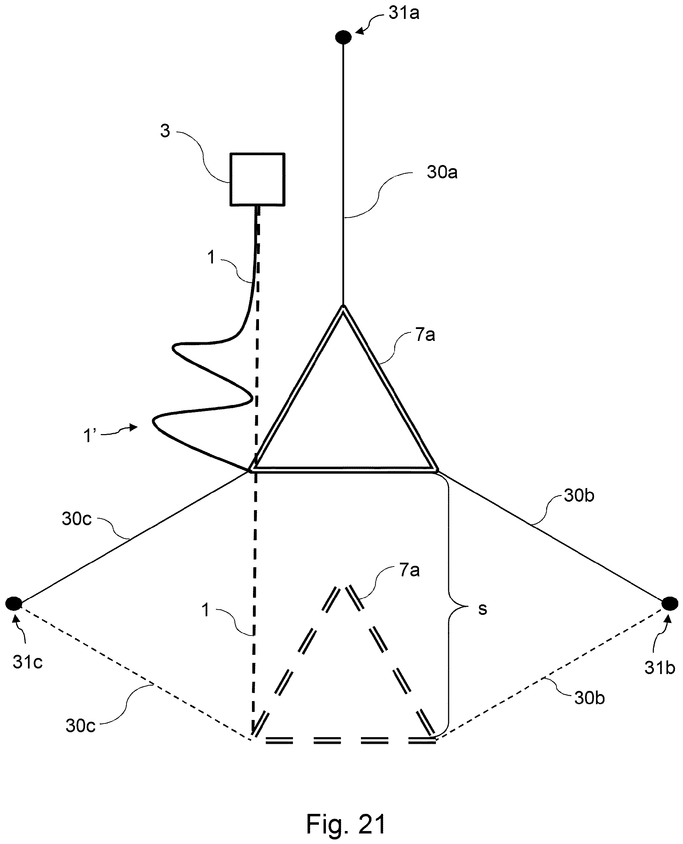

Fig. 21 shows the displacement of the floatable wind energy power plant 7a from a top view. Both the respective positions of the floatable wind energy power plant 7a from Fig. 18 (illustrated in solid lines in Fig. 21) and Fig. 20 (illustrated in dashed lines in Fig. 21) are shown. In the event of failure of a mooring line 30a, the floatable wind energy power plant 7a may travel to any position limited by the still intact mooring lines 30b-30c. The farthest possible position from the initial position is shown with dashed lines in Fig. 21, equivalent to the scenario shown in Fig. 20. The farthest travel distance s, which can also be chosen as the minimum reserve length 1' of the array cable 1, may be geometrically calculated and is equal to the horizontal span of the mooring lines, which will be discussed in relation to the next Figure. Also schematically shown is the junction box 3 from Fig. 2 with the array cable 1, which connects to the floatable wind energy power plant 7a. If a mooring line 30a fails and the position of the floatable wind energy power plant 7a shifts, the reserve length 1' of the array cable 1 expands and enables the connection to the junction box 3 to remain intact without any stress on the array cable 1 from the horizontal movement of the floatable wind energy power plant 7a.

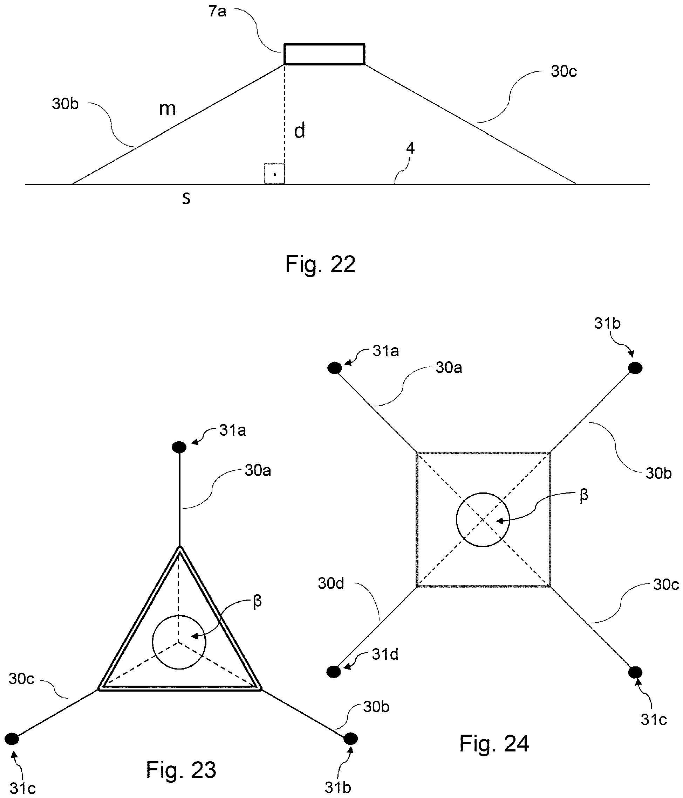

Fig. 22 shows a calculation which may be used for the reserve length 1' of the array cable 1. In shallow water or when using long mooring lines, the water depth d may be negligible when compared to the length m of the mooring line (m>>d). The horizontal span of the mooring lines s is then roughly equal to length of the mooring line (s≈m). In deeper water or when using shorter mooring lines, the horizontal span may be calculated using the Pythagorean theorem s=sqrt(m²-d²).

Fig. 23 shows a calculation which may be used for the reserve length 1' of the array cable 1 for any geometry of the mooring lines. The floating wind energy power plant 7a needs at least two intact mooring lines to prevent/minimize the risk of a failure of all the mooring lines. The farthest possible position from the initial position is dependent on the minimum angle β between any two adjacent mooring lines. The angle β is shown for an embodiment of the floatable wind energy power plant 7a with three mooring lines in Fig. 23. In Fig. 24 an embodiment of the floatable wind energy power plant 7a with four mooring lines is shown, the minimum angle β between any two adjacent mooring lines is indicated. The angle β may also be calculated for any array (number and configuration) of mooring lines.

The above-described systems and methods facilitate power generation at the floatable wind energy power plant 7a using a reserve length 1' of the array cable 1.

High reliability can be obtained, the risk of costly cable damage can be reduced, and a need for emergency disconnect arrangements at the power plant 7a can be relaxed or eliminated.

Various further inventive aspects and examples according to the present disclosure may be summarised in the following clauses:
CLAUSE C1. A method of operating a floating power plant (7a), the method comprising:
   mooring the power plant (7a) to a sea floor (4) with a plurality of mooring lines (30a-c) fixed to anchors (31a-c) on the sea floor (4),
   connecting, to the floating power plant (7a), at least one subsea cable (1) each having a reserve length (1'),
   operating the power plant (7a) while temporarily storing the reserve length (1') at or adjacent the power plant (7a),
   wherein the reserve length (1') of the subsea cable is configured to compensate for a horizontal displacement of the power plant (7a) in relation to a remaining part of the subsea cable (1), whereby the remaining part remains stationary and the subsea cable (1) remains operational during failure of any of the plurality of mooring lines (30a-30c).
CLAUSE C2. The method according to clause C1
   wherein the length of the reserve length (1') is a function of the length of the one or more mooring lines (30a-30c).
CLAUSE C3. The method according to clause C1 or C2, wherein the reserve length (1') of the subsea cable (1) is supported by a floater (10) of the power plant (7a).
CLAUSE C4. The method according to any of clauses C1 to C3, wherein the reserve length (1') is arranged on the sea floor (4).
CLAUSE C5. The method according to any of clauses C1 to C4, wherein the reserve length (1') is equal to or longer than the length of the one or more mooring lines (30a-30c).
CLAUSE C6. The method according to any of clauses C1 to C5, wherein a length (s) of the reserve length (1') is equal to or longer than a function s=sqrt(m^2 - d^2), where m is a length of a mooring line and d is a water depth.
CLAUSE C7. The method according to any of clauses C1 to C6, wherein the length (s) of the reserve length (1') is equal to or longer than a function s=cos(β/2)*2*m, where m is a length of a mooring line and β is a minimum angle between two adjacent mooring lines.
CLAUSE C8. The method according to any of clauses C1 to C7, wherein the length (s) of the reserve length (1') is equal to or longer than a function s=cos(β/2)*2*sqrt(m^2-d^2), where m is a length of a mooring line, d is a water depth and β is a minimum angle between two adjacent mooring lines.
CLAUSE C9. A floating power plant (7a), comprising:
   a floater (10);
   mooring lines (30a-30c) extending from the floater (10) to anchors (31a-c) at a sea floor (4);
   a subsea cable (1) having a reserve length (1'), the subsea cable (1) being connected to the power plant (7a),
   wherein the reserve length (1') of the subsea cable (1) is stored at or adjacent the power plant (7a) and configured to compensate for a horizontal displacement of the power plant (7a) in relation to a remaining part of the subsea cable (1), whereby the remaining part remains stationary and the subsea cable (1) remains operational during failure of any of the plurality of mooring lines (30a-30c).
CLAUSE C10.The floating power plant (7a) according to clause C9, wherein the length of the reserve length (1') is a function of the length of the one or more mooring lines (30a-30c).
CLAUSE C11.The floating power plant (7a) according to clause C9 or C10, wherein the reserve length (1') of the subsea cable (1) is supported by a floater (10) of the power plant (7a).
CLAUSE C12.The floating power plant (7a) according to any of clause C9 to C11, wherein the reserve length (1') is arranged on the sea floor (4).
CLAUSE C13.The floating power plant (7a) according to any of clause C9 to C12, wherein the reserve length (1') is equal to or longer than the length of the one or more mooring lines (30a-30c).
CLAUSE C14.The floating power plant (7a) according to any of clause C9 to C13, wherein the length (s) of the reserve length (1') is equal to or longer than a function s=sqrt(m^2 - d^2), where m is a length of a mooring line and d is a water depth.
CLAUSE C15.The floating power plant (7a) according to any of clauses C9 to C14, wherein the length (s) of the reserve length (1') is equal to or longer than a function s=cos(β/2)*2*m, where m is a length of a mooring line and β is a minimum angle between two adjacent mooring lines.
CLAUSE C16.The floating power plant (7a) according to any of clauses C9 to C15, wherein the length (s) of the reserve length (1') is equal to or longer than a function s=cos(β/2)*2*sqrt(m^2-d^2), where m is a length of a mooring line, d is a water depth and β is a minimum angle between two adjacent mooring lines.

Referring to the previous examples of Figures 8-10, and additionally new Figure 25, Figures 8 and 9 illustrate an example of a junction box 3. As before, indicated in Fig. 8, the junction box 3 may comprise a length or lengths of cabling which may function as internal connectors/connections and also fuses. As can be seen in Fig. 9 and Fig. 25, the junction box of Figure 3 is retrievable to surface from a vessel.

In the example of Fig. 25, one of the cables 20, 22, attached thereto may be or comprise an ingoing array cable from an array of offshore power generation units (best illustrated in Fig. 2). Another of the cables 20, 22 attached thereto may be or comprise an outgoing array cable, which may extend to an onshore location.

In order to connect the ingoing array cable and the outgoing array cable, the junction box 3 and the ingoing and/or outgoing array cable may be held on a vessel. The skilled person will understand that there may be various possible means by which to hold the junction box 3 and in the ingoing and/or outgoing array cables in place, for example they may be held by a crane, held by tensioners, or the like. The method may therefore comprise holding the junction box 3 on a vessel. The method may further comprise holding the ingoing and/or outgoing array cables on a vessel.

Once the junction box 3 and the ingoing and/or outgoing array cable are held in place, an operation may be performed on the junction box 3. The described method may therefore comprise performing an operation on the junction box 3, optionally performing an operation on the junction box 3 while holding the junction box 3 and/or the ingoing and outgoing array cables on a vessel. The operation may permit the connection of an ingoing array cable to an inlet connection point, and an outgoing array cable to an outlet connection point. The operation may comprise splicing of the ingoing and/or the outgoing array cable. For example, the splicing may be to a length of cabling inside the junction box 3. The length of cabling may provide an electrical connection between the inlet connection point and the outlet connection point. As such, splicing of the ingoing array cable to the inlet connection point and the outlet array cable to the outlet connection point may permit an electrical connection between the ingoing array cable and the outgoing array cable.

As illustrated in Figures 8 and 25, the junction box 3 in this example comprises a housing. To facilitate an operation to be performed, the housing may comprise at least one access point. The access point may be in the form of at least one port, through which the ingoing array cable and the outgoing array cable may be fed or located. The access point may alternatively be in the form of a removable panel or hatch, which may be opened or removed, thereby permitting access to the inside of the housing. Such access may assist in an operation to be performed (e.g. a splicing operation) on the cabling inside the housing. For example, a top or side panel of the housing may be removable in order to facilitate an operation to be performed on the cabling.

The access point may comprise a seal or sealing arrangement. The sealing arrangement may comprise at least one (e.g. multiple) individual seals. The sealing arrangement may assist to prevent ingress of water into the housing should the junction box 3 be submerged in water (e.g. if it were to be positioned in a subsea location), or at least into a section of housing in which water ingress may not be desired, for example into a section of the housing containing or comprising electrical connections. The sealing arrangement may comprise at least one seal located around the periphery of the access point.

In the example illustrated, the housing comprises a plurality of apertures 26 therein. In this example, the apertures are in the form of an array. The array of apertures may permit for water flooding of the housing of the junction box. Such water flooding may permit easier handling of the junction box 3, for example by reducing the buoyancy of the junction box when located subsea.

The junction box may comprise a section of material to hold cabling located thereinside. For example, the junction box may comprise a section of material to hold cabling inside the housing in an organised manner. The section of material may be a length of flexible bullnose. The cabling may be wrapped around the flexible bullnose prior to an operating on the cabling, and/or the ingoing/outgoing array cables. The section of material may be removed from the junction box 3 in order to perform an operation on the cabling. Having a section of material around which to wrap cabling may facilitate an operation to be performed on the cabling, as it may permit a section of the cabling to be conveniently located for splicing. For example, such a section of material may permit a section of cabling to be located proximate the access point.

The method may comprise performing a splicing operation on a vessel, on which the junction box 3 is held, such that the ingoing and outgoing array cables are spliced to the internal cabling in the junction box 3. The method may comprise sequential splicing of the ingoing and outgoing array cables to the internal cabling in the junction box 3. For example, the method may comprise first splicing the ingoing array cable to the cabling in the junction box 3, and then splicing the outgoing array cable to the cabling in the junction box 3, or vice versa. Alternatively, the method may comprise directly splicing at least a component of the ingoing array cable to the outgoing array cable in the junction box 3. As such, the method may comprise forming an electrical connection between the ingoing and outgoing array cables. The method comprises disconnecting the ingoing and outgoing array cable from an offshore power generation unit, and as such forming an electrical connection between the ingoing and outgoing array cable may permit bypass of the disconnected offshore power generation unit, such that the remainder of the array may still function. Meanwhile, the disconnected offshore power generation unit may be taken to be repaired or replaced (e.g. taken to an onshore location).

The method may comprise locating the junction box 3 at a subsea location, after an operation has been performed on the junction box 3. For example, the method may comprise releasing the junction box 3 from a floating structure (e.g. a vessel) and locating the junction box 3 at a subsea location. In one example, the method may comprise releasing the junction box 3 from a vessel, and locating the junction box on the sea floor. Such locating of the junction box 3 may be achieved by way of a support means. The support means may be or comprise a crane, a tensioner, or the like. The support means may be used to lower the junction box 3 from a floating structure (e.g. a vessel), to a subsea location. The junction box 3 may subsequently be secured at the subsea location. For example, the method may comprise providing a subsea structure onto which the junction box 3 is located. The subsea structure may be, for example, a concrete mattress, a frame, or the like. The subsea structure may assist to secure the junction box 3 on the sea floor, while still permitting the junction box 3 to be retrieved if necessary. For example, the subsea structure may assist to prevent the junction box 3 from becoming submerged in sand or detritus in a subsea location, which may increase the difficultly associated with retrieving the junction box 3 from the subsea location.

Once the junction box 3 has been located on structure, or on the sea floor, then the vessel may remain there for a period of time (e.g. days, weeks or months) until reparation or replacement of the offshore power generation unit has been completed. Once reparation or replacement of the offshore power generation unit has been completed, then the junction box 3 may once again be lifted to a floating structure (e.g. a vessel). Once on the floating structure, the ingoing and outgoing array cables on the junction box may be disconnected therefrom, and reattached to the repaired/replacement offshore power generation unit. As such, the junction box 3 may facilitate continued functioning of an array offshore power generation units, while one offshore power generation unit of the array is replaced or repaired.

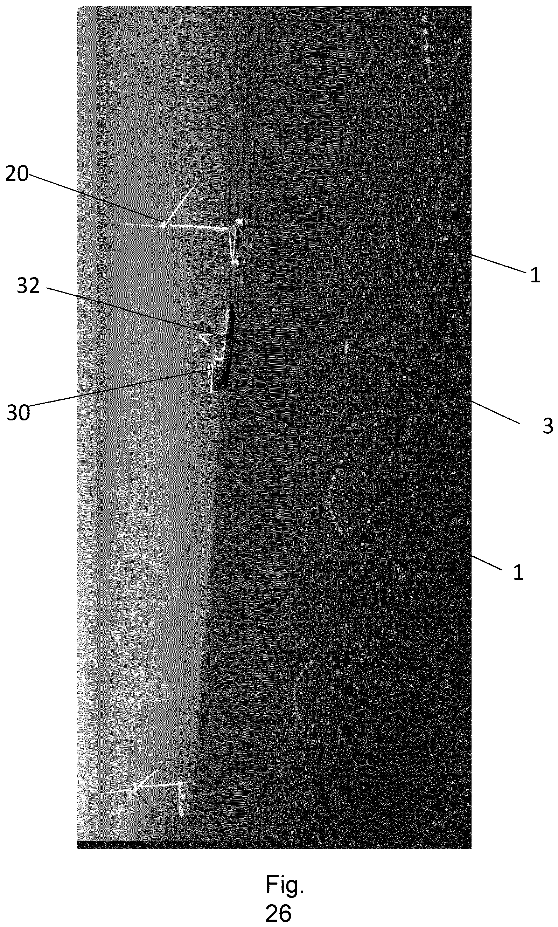

In Figure 26 there is illustrated a vessel 30 at an offshore location where there are located a plurality of power generation units, which in this case are wind turbines. As illustrated, a wind turbine 20 has been disconnected from array cables 1, and the array cables 1 are now terminated in a junction box 3. The junction box 3 is suspended from a vessel 30 by a cable 32, and the junction box 3 supports the weight of the array cables 1 as it is itself supported by the cable 32 from the vessel 30. In this case, the junction box 3 may be lowered to the seabed, and the vessel 30 may be used to tow the wind turbine 20 to a location where it is able to be repaired. In the meantime, the remainder of the power generation units may be able continue to generate power with minimal interruption. Once the wind turbine 20 has been repaired, the vessel 30 may be used to lift he junction box 3 once more, and reattach the repaired wind turbine 20 thereto. As such, the use of the junction box 3 may improve the functioning as it may permit an array of power generation units to provide power with minimal disruption caused by repairs and maintenance. In addition, the junction box may permit the array cable terminations to be safely stored in a subsea location while repair and/or maintenance work is taking place, for example without the vessel 30 having to remain on site.

Various further inventive aspects and examples according to the present disclosure may be summarised in the following clauses:
CLAUSE D1. An offshore power distribution system (100) comprising:
   a plurality of first cables (1a-n), each first cable (1a-n) having a first dry mate connection (2b) at a first end (9b) thereof and being connected to an offshore power generator unit (7) at a second end (9a) thereof;
   a subsea junction box (3) arranged at a sea floor (4), wherein each dry mate connection (2b) terminates inside the junction box (3);
   a second cable (5) extending from the junction box (3) to a subsea transformer station (6) arranged at the sea floor (4), the second cable (5) having a second dry mate connection (10a) at an end (11a) thereof, the second dry mate connection (10a) terminating inside the junction box (3) operatively connected to the first dry mate connection (2b);
   the second cable (5) extending to a subsea transformer station (6) arranged at the sea floor (4) and operatively connected to the transformer station (6);
   a third cable (12) extending from the transformer station (6) to an onshore receiver (8);
   the power distribution system being configured to transmit electric power from the offshore power generator unit (7), via the first, second and third cables, to an onshore receiver (8).
CLAUSE D2. An offshore power distribution system (100) according to clause D1, wherein the first dry mate connection (2b) is:
   a dry mate connector (2b), or
   a spliced connection.
CLAUSE D3. An offshore power distribution system (100) according to clause D1 or D2, wherein the second dry mate connection (10a) is:
   a dry mate connector (10a), or
   a spliced connection.
CLAUSE D4. An offshore power distribution system (100) according to any preceding clause, wherein the third cable (12) is configured to operate with a higher voltage than the first cables (1a-n) and the second cable (5).
CLAUSE D5. An offshore power distribution system (100) according to any preceding clause, wherein the first cables (1a-n) and the second cable (5) are configured to operate with the same voltage.
CLAUSE D6. An offshore power distribution system (100) according to any preceding clause, wherein a cross-section of the third cable (12) is lower than a cross-section of the second cable (5) or the combined cross-section of a plurality of second cables (5).
CLAUSE D7. An offshore power distribution system (100) according to any preceding clause, wherein the subsea junction box (3) is retrievable to surface.
CLAUSE D8. An offshore power distribution system (100) according to any preceding clause, wherein each of the plurality of first cables (1a-n) is operatively connected to an inline fuse (33) arranged in the junction box (3).
CLAUSE D9. An offshore power distribution system (100) according to any preceding clause, wherein the plurality of first cables (1a-n) has a design operational voltage of above 45 kV.
CLAUSE D10. An offshore power distribution system (100) according to any preceding clause, wherein each power generation unit (7) comprises a respective switchgear arranged on or in the power generation unit (7), the switchgear being operable to selectively disconnect the respective power generation unit (7) from its first cable (1a-n).
CLAUSE D11. An offshore power distribution system (100) according to the preceding clause, wherein neither the first cable (1a-n), the subsea junction box (3), the second cable (5) nor the transformer station (6) comprises a switchgear operable to selectively disconnect a power generation unit (7).
CLAUSE D12. An offshore power distribution system (100) according to any preceding clause, wherein an end section (35) of the first cables (1a-n) and an end section (36) of the second cable (5) are laid out in parallel on the sea floor (4).
CLAUSE D13. An offshore power distribution system (100) according to the preceding clause, wherein the end section (35) of the first cables (1a-n) and the end section (36) of the second cable (5) are laid out at position having a water depth, and wherein the end section (35) of the first cables (1a-n) and the end section (36) of the second cable (5) which are laid out in parallel on the sea floor (4) each have a length which is larger than the water depth.
CLAUSE D14. A method of installing an offshore power distribution system (100) comprising the steps:
   installing a plurality of power generators (7), each power generator having a first cable (1a-n) with a first dry mate connector (2b) at a first end (9b) thereof;
   installing a subsea transformer station (6) at the sea floor (4) and installing a third cable (12) extending from the transformer station (6) to an onshore receiver (8);
   installing a subsea junction box (3) at the sea floor (4),
   connecting the subsea junction box (3) and the transformer station (6) with a second cable (5);
   connecting the first cable (1a-n) with the second cable (5), wherein the step of connecting the first cable (1a-n) with the second cable (5) comprises establishing a dry mate connection between the first cable (1a-n) and the second cable (5) within the junction box (3).
CLAUSE D15. A method according to clause D14, comprising
   wet storing the first dry mate connector (2b) at a sea floor (4);
   and wherein the step of connecting the first cable (1a-n) with the second cable (5) comprises retrieving the first dry mate connector (2b) from the sea floor (4) and establishing the dry mate connection between the first cable (1a-n) and the second cable (5) at a vessel (20).
CLAUSE D16. A method according to clause D14 or D15, comprising
   wet storing a second dry mate connector (10a) connected to the second cable (5) at a sea floor (4);
   and wherein the step of connecting the first cable (1a-n) with the second cable (5) comprises retrieving the second dry mate connector (10a) from the sea floor (4) before establishing the dry mate connection between the first cable (1a-n) and the second cable (5) at the vessel (20).
CLAUSE D17. A method according to any of clause D14 to D16, comprising arranging an end section (35) of the first cables (1a-n) and an end section (36) of the second cable (5) in parallel on the sea floor (4).
CLAUSE D18. A method according to the preceding clause, wherein the end section (35) of the first cables (1a-n) and the end section (36) of the second cable (5) are arranged at position having a water depth, and wherein the end section (35) of the first cables (1a-n) and the end section (36) of the second cable (5) which are arranged in parallel on the sea floor (4) each have a length which is larger than the water depth.
CLAUSE D19. A method according to any of clauses D14 to D18, comprising installing the subsea transformer station (6) together with the second cable (5) and with a transformer end connector (10b) of the second cable (5) having been pre-installed on the transformer station (6).
CLAUSE D20. A method according to any of clauses D14 to D19, comprising installing the subsea transformer station (6) together with the third cable (12) or a part of the third cable (12), and with the third cable (12) or the part of the third cable (12) having been pre-installed on the transformer station (6).
CLAUSE D21. A method of distributing power in an offshore power distribution system (100), the method comprising:
   operating a system according to any of clauses D1-D13;
   retrieving the junction box (3) from the sea floor (4) to a vessel (20);
   carrying out an installation, de-installation or service operation on the junction box (3); and
   re-installing the junction box (3) to the sea floor (4).

The invention is not limited by the embodiments described above; reference should be had to the appended claims.

## Claims

1. A method for temporary removal of an offshore power generation unit (7) from an array of connected offshore power generation units (7), comprising:
disconnecting an ingoing and an outgoing array cable from the offshore power generation unit (7);
providing a junction box (3) having an inlet connection point and an outlet connection point;
connecting the ingoing cable to the inlet connection point and the outgoing cable to the outlet connection point;
locating the junction box (3) at a subsea location;
using support means to position the junction box at a subsurface location having the ingoing array cable attached to the ingoing connection point, and the outgoing cable attached to the outgoing connection point;
disconnecting the ingoing and the outgoing array cable from the inlet and outlet connection points, respectively, and reconnecting the ingoing and outgoing array cable to the offshore power generation unit (7a).

2. The method according to claim 1, comprising using the support means to lower the junction box (3) from a surface location, to a subsea location.

3. The method according to claim 1 or 2, comprising using the support means to lift the junction box (3) from subsea location, to a surface location.

4. The method according to any of claims 1 to 3, comprising using the support means to lift the junction box (3) from a subsea location, and onto a floating structure (37).

5. The method according to claim 4, wherein the floating structure (37) is a vessel.

6. The method according to any preceding claims, comprising performing an operation on the junction box (3) to connect the ingoing cable to the inlet connection point, and the outgoing cable to the outlet connection point.

7. The method according to claim 6, wherein the operation is a splicing operation.

8. The method according to any preceding claim, comprising installing a subsea structure onto which the junction box (3) is located in a subsea location.

9. The method according to claim 8, wherein the subsea structure is a concrete mattress.

10. The method according to any preceding claim, wherein the junction box (3) comprises a housing containing an inlet access for providing access to the inlet connection point, and an outlet access for providing access to the outlet connection point, wherein the inlet access and the outlet access are separate and distinct from one another.

11. The method according to any preceding claim, wherein the ingoing and outgoing array cables are two separate cables.

12. The method according to any preceding claim, comprising installing a corrosion protection arrangement to the junction box (3).

13. The method according to any preceding claim, wherein the offshore power generation unit (7) is a floating wind turbine.

14. A junction box (3) for temporary connection to an array of offshore power generation units (7), comprising:
a housing having an inlet connection point and an outlet connection point, the inlet connection point being in communication with the outlet connection point via internal cable located inside the housing;
the housing comprising a lifting engagement arrangement for connection of lifting means;
wherein the junction box (3) is able to be lifted via engagement of a lifting means with the lifting engagement, with an inlet and an outlet cable at the inlet connection point and the outlet connection point.
